# EUROPEAN PATENT APPLICATION

(11) **EP 3 043 538 A1**
(43) Date of publication of application: **13.07.2016**
(21) Application number: 13884968.2
(22) Date of filing: 21.06.2013
(51) Int. Cl.: H04M 1/11

(54) **POSITIONING ASSEMBLY FOR ELECTRONIC APPARATUS**

(30) Priority: 23.05.2013 CN 201310195212
(71) Applicant: Supermax Co., Ltd., Taipei (TW); Hsu, Yung-lung, New Taipei City 231 (TW)
(72) Inventor: HSU, Yung-Lung, New Taipei City 231 Taiwan (TW)
(74) Representative: Zeitler Volpert Kandlbinder Patent- und Rechtsanwälte Partnerschaft mbB
(86) International application number: PCT/CN2013/000723
(87) International publication number: WO 2014/186916

(57) **Abstract**

The present invention is a positioning assembly for an electronic apparatus, and is about a positioning assembly for rapidly positioning and disassembling an electronic apparatus by means of the characteristics of magnetic adsorption and repulsion to make the electronic apparatus portable and available at any time. The positioning assembly structurally comprises a shell, which can be fixed on the back of the electronic apparatus and is provided with a first multi-polar magnetic unit, and a support member, which is internally provided with a second multi-polar magnetic unit, wherein the magnetic poles of the second multi-polar magnetic unit of the support member and the first multi-polar magnetic unit are arranged in such a manner that the magnetic poles with opposite magnetisms are corresponding to each other, enabling the first multi-polar magnetic unit to be adsorbed onto the second multi-polar magnetic unit at a particular angle and also enabling the shell to be positioned on the support member under strong adsorption; and when the shell is rotated by an angle, the first multi-polar magnetic unit and the second multi-polar magnetic unit are mutually repulsive, so that the shell can be separated rapidly to thereby improve the convenience in use.

## Description

### BACKGROUND OF THE INVENTION

### 1. Field of the invention

The present invention relates to a set of positioning component which includes a back side for fixing on the back of an electronic device, and includes a housing with a first magnetic unit and with multi-poles, the electronic device has therein a supporting piece having a second magnetic unit with multi-poles, by having the characteristic of magnetic adsorption as well as mutual rejection, the housing and the supporting piece can mutually fast positioning and detaching against each other, in order to increase their convenience of use.

The present invention provides a set of positioning component for a mobile phone, a tablet computer, a digital picture frame, a driving recorder, a monitor, and a displayer etc. for an electronic device, and especially to a set of positioning component for an electronic device which can make positioning of the electronic device by magnetic adsorption from a special angular direction, or otherwise can make separation as well as detaching of the electronic device by a biased rotating mode.

### 2. Description of the prior art

A smart phone, a tablet (PC) computer, a Pocket PC, a personal digital assistant (PDA), a digital picture frame or a driving recorder etc., these portable electronic devices in normal use are handled by one hand; however, we are aware that various electronic device supporting racks have been existed and used in many public fields for a long time. And we are aware that supporting racks for the conventional electronic devices normally have a frame for setting the electronic device, and have a supporting leg to support the frame; thereby, the supporting racks can be placed on a desk, a chair, a wall or can be placed at the inner side of a window of a windshield of a car.

For the purpose of avoiding the electronic device from fall ing down the supporting racks and thus is damaged, a clamping arm between the electronic device and the supporting rack can be provided for locking tight, by this way, when the user moves the electronic device for carrying, he must detach the electronic device down from the supporting rack for carrying it, this is quite inconvenient in use.

Additionally, a tablet computer or a mobile phone used in a household or an office for document treatment or reading normally is put to form an upright position, whereas when it is carried into a car for viewing a cinematograph or multimedia, it is put at a horizontal position. Thereby, in the process of operating a tablet computer or a mobile phone, we frequently need an operation of positioning and detachment, and need a random swiveling adjustment between the two positions. And now the products in the market evidently are lackof satisfaction tomeet such necessity.

In view of the above statement, the inventor of the present application provides after studying and based on his professional experience of years in the field of production, manufacturing and designing to overcome the defects of the conventional technique.

### SUMMARY OF THE INVENTION

The main object of the present invention is resided in providing a set of positioning component that can make fast positioning of the electronic device by magnetic adsorption from a special angular direction, or otherwise can make fast separation as well as detaching of the electronic device by a biased rotation.

In order to get the above stated object, the electronic device of the set of positioning component includes:
A housing which is fixed on a back side of an electronic device, the housing is provided therein with a first magnetic unit with multi-poles (including multiple S and N), the multi-poles (including multiple S and N) of the multi-poles of the first magnetic unit are arranged in an circular area, the magnetic polarities (S or N) of every two neighboring magnetic-poles (including multiple S and N) are contrarily provided.

A supporting piece is provided in the second magnetic unit with multi-poles (including multiple S and N), each magnetic polarity (S or N) of the second magnetic unit is contrarily provided relatively to the first multi-poles (including multiple S and N), in order to render the first magnetic unit in the housing to do magnetic adsorption on the second magnetic unit withmulti-poles (including multiples and N) from a special angular direction, or otherwise make separation as well as detaching of the first magnetic unit withmulti-poles (including multiple S and N)do its biased rotating against the second magnetic unit with multi-poles (including multiple S and N).

With the above stated, the housing can be fixed on a back side of an electronic device in advance, and the electronic device is connected with the housing to form one body, and makes the supporting piece be provided on a chair, a desk, a wall or on an inner side of a windshield window of a car or on a suitable electronic device in advance, in this way, the housing on the back of the electronic device can be stuck to the supporting piece along a special angular direction, so that each polarity (S or N) of the first magnetic unit with multi-poles (including multiple S and N) is provided with contrary magnetic polarity relative to that of the second magnetic unit with multi-poles, so that the multi- poles of the first magnetic unit can strongly adsorbed on the second magnetic unit with multi-poles (including multiple S and N) through the above said housing and the above said supporting piece, and makes fast positioning of the electronic device on the supporting piece.

When it is desired to detach the electronic device, it needs only to make biased rotation of the electronic device along the mutually contact surfaces of the housing with the supporting piece, and this renders the poles (including multiple S and N) of the first magnetic unit in the housing do biased rotation along with the electronic device. So that the first magnetic unit in the housing does biased rotation along with the electronic device to fast reject and separate mutually with the second magnetic unit with multi-poles (including multiple S and N), thereby the electronic device can be easily taken off from the supporting piece along with the housing.

In comparison with the prior technique, through the arrangement that the first magnetic unit with multi-poles (including multiple S and N) and the second magnetic unit with multi-poles (including multiple S and N) to be provided with mutual contrary magnetic polarity (S or N) against each other, the electronic device of the present invention can do fast positioning and detachment for the electronic device, the electronic device can be moved for use or positioned at any time, for conveniently viewing the multi-media and vision messages at any time. And more, in practice of the above said first magnetic unit and the second magnetic unit, the multi-poles (including multiple S and N) can be divided into 8 or its double by numeral and are arranged to equally occupying 360 degrees, this can make the relative angles between the housing and the supporting piece be at the magnetic adsorption states at least at the degree numbers 0, 90, 180 and 270. These especially suit the portable electronic devices with mobile phones, tablet computer, digital picture frame etc.

The present invention will be apparent in its particular content and the effect to be achieved after reading the detailed description of the preferred embodiment thereof in reference to the accompanying drawings.

### BRIEF DESCRIPTION OF THE DRAWINGS

Fig. 1 is a perspective view of a preferred embodiment of the present invention;
Fig. 2 is an anatomic perspective view of Fig. 1 of the present invention;
Fig. 3 is a perspective view showing another view point of Fig. 1 of the present invention;
Fig. 4 is a sectional view of the embodiment of Fig. 1 of the present invention;
Fig. 5 is a schematic perspective view showing the embodiment of the first magnetic unit and the second magnetic unit with multi-poles (including multiple S and N) of Fig. 4;
Fig. 6 is a sectional view showing the embodiment of Fig. 4 in use;
Fig. 7 is a schematic perspective view showing the embodiment of the first magnetic unit and the second magnetic unit of Fig. 6 with multi-poles (including multiple S and N);
Fig. 8 is a perspective schematic view showing practice of the second embodiment of the present invention;
Fig. 9 is a perspective schematic view showing the embodiment of Fig. 8 in use;
Fig. 10 is a schematic view showing use of the present invention on a rack hanged on a wall;
Fig. 11 is a schematic view showing use of the present invention on a clamping seat in a car.

### DETAILED DESCRIPTION OF THE PREFERRED EMBODIMENT

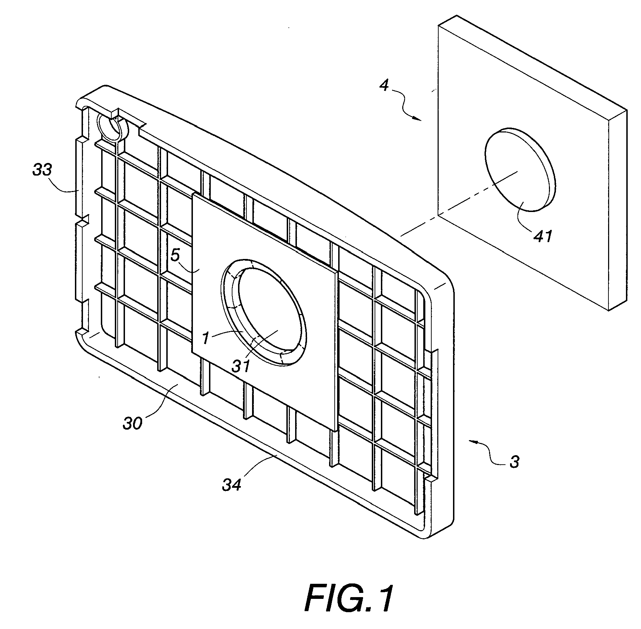

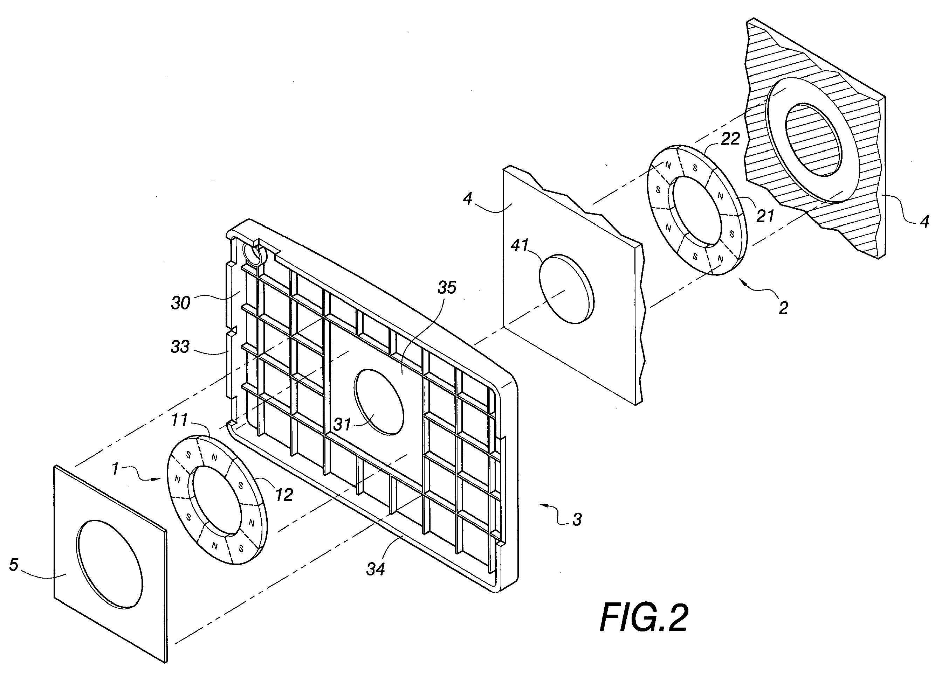

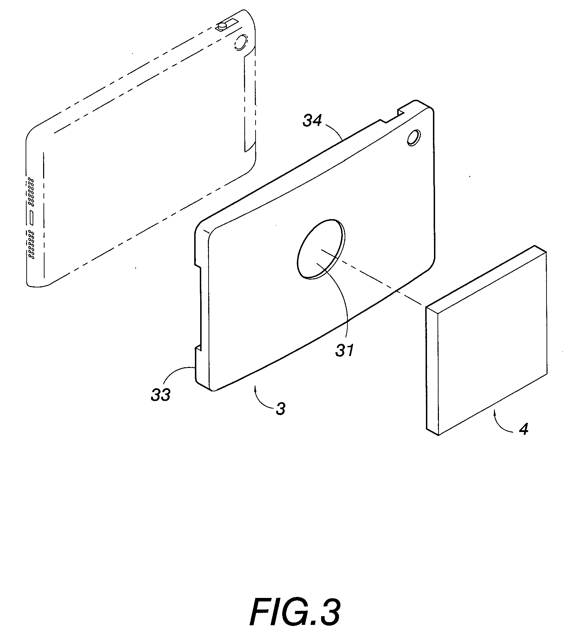

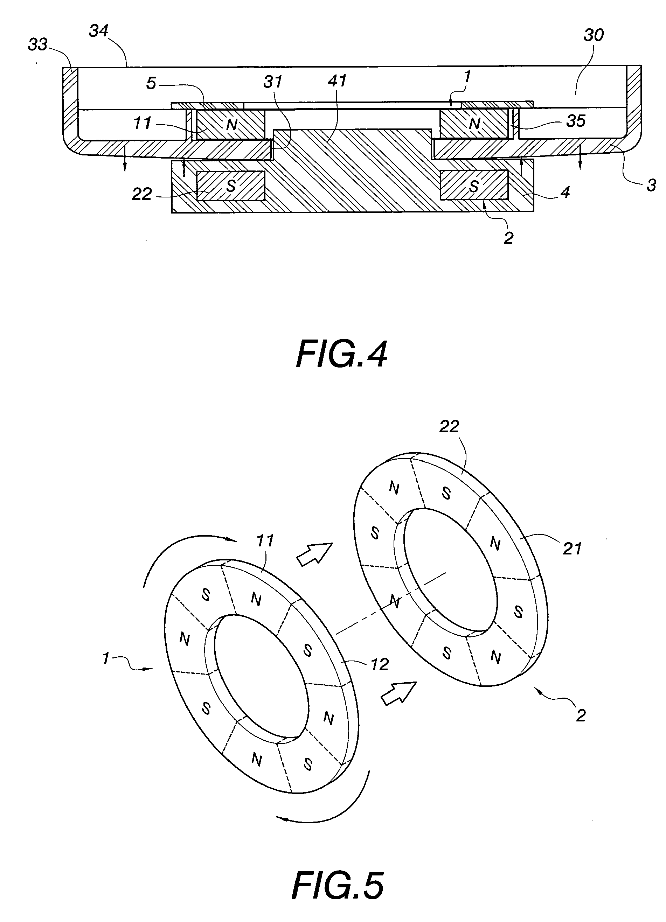

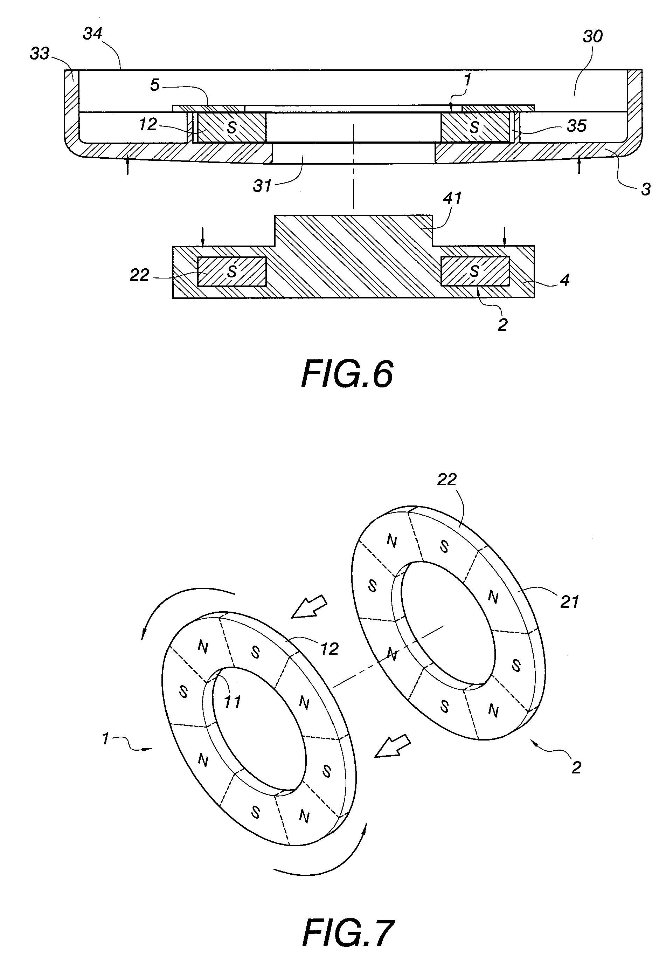

Referring to Figs. 1 to 7 which discloses practice of the first embodiment of the present invention, wherein Fig. 1 is a perspective view in practice of a preferred embodiment of the present invention; Fig. 2 is an anatomic perspective view of Fig. 1; Fig. 3 is a perspective view showing another view point of Fig. 1; Fig. 4 is a sectional view of the embodiment of Fig. 1; and Fig. 5 is a schematic perspective view showing the embodiment of the first magnetic unit and the second magnetic unit with multi-poles (including multiple S and N) of Fig. 4; while Fig. 6 is a sectional view showing the embodiment of Fig. 4 in use; Fig. 7 is a schematic perspective view showing the embodiment of the first magnetic unit and the second magnetic unit of Fig. 6 with multi- poles (including multiple S and N).

From the above disclosed, we see a set of component for an electronic device, which includes a housing 3 which is fixed on a back side of an electronic device and is provided with a first magnetic unit 1 with multi-poles (including multiple S and N), and includes a supporting piece 4 which is provided therein with a second magnetic unit 2 with multi-poles (including multiple S andN). Wherein the housing 3 is provided with an engaging cover 30 that can cover the back of the electronic device, the housing 3 can take plastic or rubber as its forming material, the engaging cover 30 and the back of the electronic device can mutually tightly match with each other in order to fix the electronic device.

Wherein the housing 3 is provided therein with a first magnetic unit 1 with multi-poles (including multiple S and N) at the central bottom of the engaging cover 30; the multi-poles (including multiple S and N) 11, 12 of the first magnetic unit 1 are arranged in a circular ring, the magnetic polarity (S or N) of every two neighboring magnetic poles (including multiple S and N) 11, 12 of the first magnetic unit 1 are mutually contrarily provided, for instance, the poles 11 are all of N poles, while their neighboring magnetic-poles 12 are all of S poles.

The magnetic-poles 21, 22 of the second magnetic unit 2 are arranged and contrarily provided relatively to the multi-poles 12, 11 relatively of the first magnetic unit 1; the magnetic-poles 21, 22 of the second magnetic unit 2 are also mutually arranged and contrarily provided, for instance, the poles 21 are all of N poles, while their neighboring magnetic-poles 22 are all of S poles.

The first magnetic unit 1 with multi-poles 12, 11 in the housing 3 does magnetic adsorption on the second magnetic unit 2 with multi-poles 21, 22 from a special angular direction, or otherwise the first magnetic unit 1 with multi- poles 12, 11 does its biased rotating to make separation as well as detaching from the second magnetic unit 2 with multi-poles 21, 22.

With the above stated structure, in practicing the present invention, the engaging cover 30 of the housing 3 can be fixed on a back side of the electronic device in advance, and the electronic device is connected with the housing 3 to form one body, while the supporting piece 4 can be provided on a chair, a desk, a wall or on an inner side of a windshield window of a car or on a suitable electronic device in advance,

When it is desired to make positioning of the electronic device onto a chair, a desk, a wall or on an inner side of a windshield window of a car or on another suitable place, the housing 3 on the back side of the electronic device can be stuck to the supporting piece 4 along a special angular direction, and make the multi-poles 12, 11 of the first magnetic unit confront the multi-poles 21, 22 of the second magnetic unit 2, so that poles N of the first magnetic unit 1 confront the poles S of the second magnetic unit 2, and poles S of the first magnetic unit 1 confront the poles N of the second magnetic unit 2, so that the multi-poles 12, 11 of the first magnetic unit 1 can strongly adsorbed on the multi-poles 21 , 22 of the second magnetic unit 2 through the above said housing 3 and the above said supporting piece 4, and makes fast positioning the back of the electronic device on the supporting piece 4.

When it is desired to detach the electronic device, it needs only to make biased rotation of the electronic device along the mutually contact surfaces of the housing 3 with the supporting piece 4 to render the poles 11, 12 of the first magnetic unit 1 in the housing 3 to do biased rotation along with the electronic device, to have the poles 11, 12 of the first magnetic unit 1 to meet the multi-poles 21, 22 of the second magnetic unit 2 of the same magnetic polarities (S or N), i.e., the S polarities of the first magnetic unit 1 meet the S polarities of the second magnetic unit 2, the N polarities of the first magnetic unit 1 meet the N polarities of the second magnetic unit 2. So that the first magnetic unit 1 with multi-poles 11, 12 in the housing 3 does biased rotation along with the electronic device to reject and separate from the second magnetic unit 2 with multi-poles 21, 22 in the supporting piece 4, thereby the electronic device can be easily taken off from the supporting piece 4 along with housing 3.

Therefore, by the above arrangement of the contrary and same polarities of the multi-poles 11, 12, 21, 22 of the first magnetic unit 1 and the second magnetic unit 2, the electronic device can be fast positioned and detached, the object of having the electronic device carried for use or positioned at any time can be achieved, this is beneficial to view the multimedia image and video message at any time.

In the drawings (Figs. 1-7), the multi-poles 11, 12, 21, 22 of the first magnetic unit 1 and the second magnetic unit 2 are 8 by numeral respectively or are its double by numeral for equally occupying the 360 degrees of the first magnetic unit 1 and the second magnetic unit 2 respectively, in order that the angles of the supporting piece 4 and the housing 3 relative to each other make a mutual adsorbing state if the angles are of one of 0, 90, 180 or 270 degrees, while if the supporting piece 4 and the housing 3 mutually do bias rotation for an angle, the supporting piece 4 and the housing 3 reject and separate mutually with each other.

In this way, the multi-poles 11, 12, 21, 22 of the first magnetic unit 1 and the second magnetic unit 2 are of 8 by numeral respectively or are of its double by numeral for equally occupying the 360 degrees of the first magnetic unit 1 and the second magnetic unit 2 respectively, in order that the angles of the supporting piece 4 and the housing 3 relative to each other make a mutual adsorbing state if the angles are of one of 0,90, 180 or 270 degrees, while if the supporting piece 4 and the housing 3 mutually do bias rotation for an angle, the supporting piece 4 and the housing 3 reject and separate mutually with each other. This especially suit the portable electronic device such as a mobile phone, a tablet computer, a digital picture frame etc. in order to overcome the problem that the rotating operation of the conventional supporting piece 4 and the picture frame is unable to match the need of a user for random adjustment.

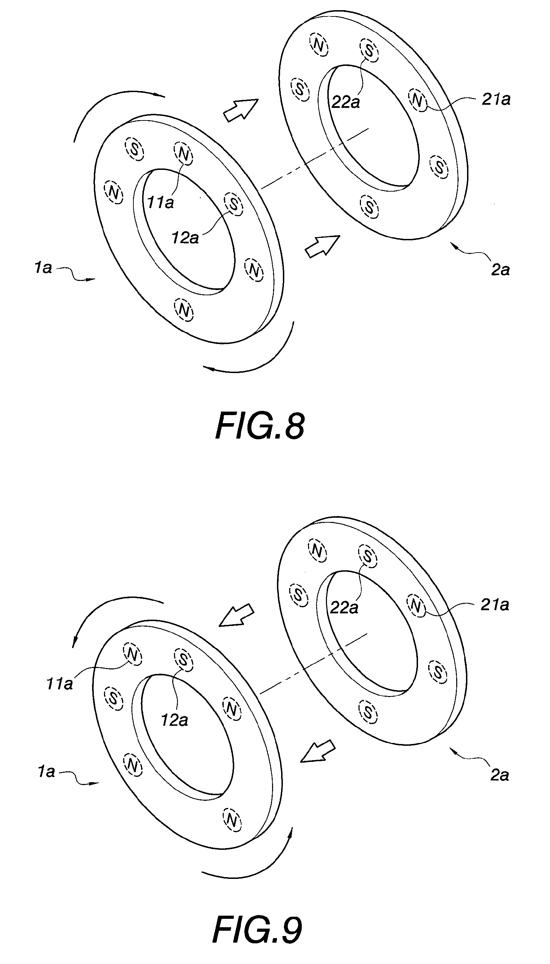

Please refer to Figs. 8 - 9, a second embodiment to be practiced of the present invention is disclosed, wherein Fig. 8 is a perspective schematic view of Fig. 5 showing practice of the second embodiment of the present invention, Fig. 9 is a perspective schematic view showing the embodiment of Fig. 8 in use.

According to the drawings of Fig. 1 to Fig. 3, we see another embodiment of positioning component for the electronic device of the present invention, it includes a housing 3 which is fixed on a back side of a portable electronic device and is provided with a first magnetic unit 1a, and is provided with a supporting piece 4 have therein a second magnetic unit 2a, wherein:
The first magnetic unit 1a in the housing 3 at least has 5 multi-poles 11a and 12a, of which 4 multi-poles 1a (Figs. 8-9) are given with same polarities (N) and respectively located in the areas 0, 90, 180 or 270 degrees, and the remaining one pole 12a (or more) are provided with contrary polarities (S) from the above 4 multi-poles 11a and are located in the areas 0, 90, 180 or 270 degrees.

Likewise, the second magnetic unit 2a in the housing 3 at least has 5 multi-poles 21a and 22a, of which 4 multi-poles 22a of the second magnetic unit 2a (Figs. 8 - 9) are given with same polarities (S) and respectively located in the areas 0, 90, 180 or 270 degrees, and are provided with contrary polarities (S) against the multi-poles 11a, the remaining one or more than one poles 21a of the second magnetic unit 2a are provided with contrary polarities (N) against the above 4 multi-poles 22a of the second magnetic unit 2a which are located in the areas 0, 90, 180 or 270 degrees. So that the first magnetic unit 1a in the housing 3 with multi-poles 12a, 11a does magnetic adsorption relative to the supporting piece 4 in the areas of 0, 90, 180 or 270 degrees, and do bias rotation for an angle, the supporting piece 4 and the housing 3 reject and separate mutually with each other.

With the above stated structure, when the housing 3 is fixed on a back side of the electronic device does magnetic adsorption relative to the supporting piece 4 in the areas of 0, 90, 180 or 270 degrees, the first magnetic unit la with multi-poles 12a, 11a are provided with contrary polarities against the polarities 21a, 22a of the second magnetic unit 2a, so that the first magnetic unit 1a does magnetic adsorption on the second magnetic unit 2a, to make fast positioning of the electronic device on the supporting piece 4.

When the multi-poles 12a, 11a of the first magnetic unit 1a in the housing 3 do biased rotating along with the electronic device to be provided with same polarities (S or N) as the polarities 21a, 22a of the second magnetic unit 2a to make separation as well as detaching of the second magnetic unit 2a in the supporting piece 4 by biased rotating of the first magnetic unit 1a, thereby the electronic device can be easily taken off from the supporting piece 4.

Accordingly, by having the 4 multi-poles 11a, 22a of the first magnetic unit 1a, 2a being of the same polarity (S or N) in the areas 0, 90, 180 or 270 degrees; the remaining one or more than one poles 12a, 21a are provided with contrary polarities against the above 4 multi-poles 11a, 22a, the numbers of the multi-poles 11a, 22a can thus be reduced, and also the cost of production can be effectively reduced.

In practice, as shown by the examples in Figs. 8 and 9, the first and the second magnetic units 1a, 2a can be respectively one or more than one of the poles 12a, 21a, the two poles need not at mutually equal positions, it needs only that the first and the second magnetic units 1a, 2a can be mutually separated as well as detached during biased rotating of the first magnetic unit 1a and 2a, the object of separating the first magnetic unit 1a and 2a can thus be achieved.

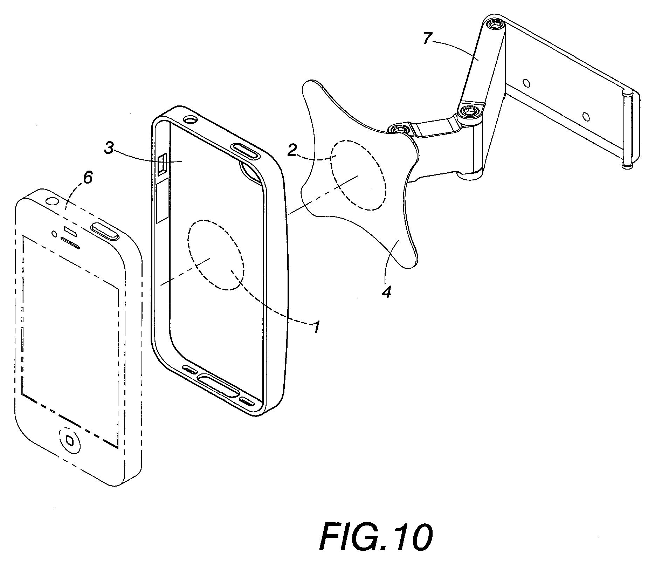

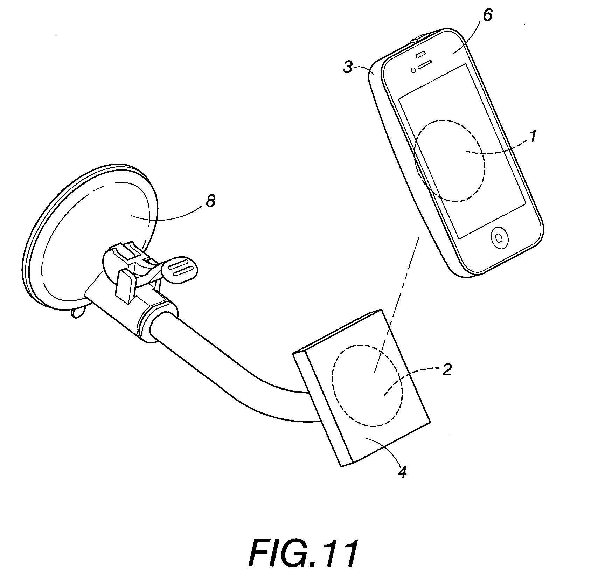

In further actual practice, as shown in Figs. 10 and 11, an electronic device 6 can be an electronic dictionary, a mobile phone, a tablet computer, a palm computer, a personal digital assistance, a digital picture frame, a driving recorder, a monitor, a displayer or a TV etc. Actually, the supporting piece 4 can be provided on a wall frame 7, a rack or a clamping seat8 in a car, or on a screen or a wall of an office.

And more, the first and the second magnetic units 1, 2 can be respectively integrally formed; otherwise, the first and the second magnetic units 1, 2 can be respectively formed of a pluralityof sector shapes magnetic stones; otherwise, the first and the second magnetic units 1a, 2a can be formed by arrangement of a plurality of magnetic stones.

Referring to Figs. 4 - 7, in practice, the housing 3 and the supporting piece 4 can be respectively provided with a dented round recess 31 and a protruding block 41 for positioning when in adsorption, and the dented round recess 31 and the protruding block 41 can be taken as centers when in biased rotation for mutual rejecting and separating; the multi-poles 11, 12, 21, 22, 11a, 12a, 21a, 22a of the first magnetic unit 1, 1a and the second magnetic unit 2, 2a are arranged around their related dented round recess 31 and protruding block 41.

We can know therefore, by using the dented round recess 31 and the protruding block 41 for the first magnetic unit 1, 1a and the second magnetic unit 2, 2a to position the housing 3 and the supporting piece 4 when in adsorption, and to make mutually contrary rotating of the housing 3 relative to the supporting piece 4 when in mutually biased rotating of the first magnetic unit 1, 1a and the second magnetic unit 2, 2a. This can stably make mutually contrary rotating of the housing 3 relative to the supporting piece 4.

When in practice, the housing 3 is of an arch shape which is protruding at its central area, this can reduce the friction force at the contact surface between the housing 3 and the supporting piece 4. Under the condition when the housing 3 has the enough force for adsorption, the electronic device can easily do biased rotating along the contact surface between the housing 3 and the supporting piece 4.

When in practice, the housing 3 is of an arch shape which is protruding at its central area, the housing 3 at least has its two lateral sides been provided each with an engaging rim 33 to be engaged with the two sides of the portable electronic device; otherwise, with the arch shape protruding at its central area, it allows the peripheral four sides of the housing 3 to have corresponding engaging rims 33, 34 to engage wi th the corresponding four sides of the electronic device restively.

Therefore, by having the arch shape of the housing 3 which is protruding at its central area, the friction force at the contact surface between the housing 3 and the supporting piece 4 can be reduced.

And in practice, the housing 3 also can be made as a back cover of a portable electronic device directly, in order that the electronic device itself can have a function of the housing 3 as mentioned above.

The embodiment provided above is only for illustrating the present invention, and not for giving any limitation to the scope of the present invention; it will be apparent to those skilled in this art that various modifications or changes without departing from the spirit of this invention shall also fall within the scope of the appended claims.

## Claims

1. A positioning assembly for an electronic device comprising:
a housing that is adapted to be fixed on a back side of said electronic device, said housing is provided therein with a first magnetic unit with multi-poles, said multi-poles of said first magnetic unit are arranged in a circular ring, and magnetic polarities (S or N) of every two neighboring magnetic-poles (including multiple S and N) are provided contrarily; and
a supporting piece is provided therein with second magnetic unit with multi-poles, said multi-poles of said second magnetic unit are arranged to be provided with contrary magnetic polarities against said multi-poles of said first magnetic unit, in order that said multi-poles of said first magnetic unit in said housing is adsorbed on said multi-poles of said second magnetic unit from a special angular direction, or said first magnetic unit in said housing do biased rotation to reject and separate mutually with said second magnetic unit with multi-poles.

2. The positioning assembly for an electronic device as in claim 1, wherein: said multi-poles of said first magnetic unit and second magnetic unit are respectively divided into 8 by numeral or of its double by numeral for equally occupying 360 degrees of said first magnetic unit and said second magnetic unit, in order that angles of said supporting piece and said housing relative to each other make a mutual adsorbing state when said angles are of one of 0, 90, 180 or 270 degrees, while when said supporting piece and said housing mutually do bias rotation for an angle, said supporting piece and said housing reject and separate mutually with each other.

3. A positioning assembly for an electronic device comprising:
a housing that is adapted to be fixed on a back side of said electronic device, said housing is provided therein with a first magnetic unit with multi-poles, said first magnetic unit at least has 5 multi-poles, of which 4 multi-poles are given with same polarities and respectively located in areas 0, 90, 180 or 270 degrees, and a remaining one pole (or more) are provided with contrary polarities against said 4 multi-poles and are located in areas 0, 90, 180 or 270 degrees, and
a supporting piece is provided therein with a second magnetic unit with multi-poles, said multi-poles of said second magnetic unit at least has 5 multi-poles, of which 4 multi-poles are given with contrary polarities and respectively located in areas 0, 90, 180 or 270 degrees, in order that said multi-poles of said first magnetic unit in said housing is adsorbed on said multi-poles of said second magnetic unit, or said first magnetic unit in said housing do biased rotation to reject and separate mutually with said second magnetic unit with multi-poles.

4. The positioning assembly for an electronic device as in any one of claims 1-3, wherein: said housing and said supporting piece are respectively provided with a dented round recess and a protruding block, when in adsorption of said dented round recess with said protruding block, said protruding block is engaged in said dented round recess for positioning, said dented round recess and said protruding block are taken as centers when in biased rotation for mutual rejecting and separating.

5. The positioning assembly for an electronic device as in claim 4, wherein: said multi-poles of said first and said second magnetic units are arranged around their related dented round recess and protruding block.

6. The positioning assembly for an electronic device as in any one of claims 1-3, wherein: said housing is of an arch shape which is protruding at its central area, and at least on two lateral sides each is provided respectively with one engaging side for engaging a portable electronic device.

7. The positioning assembly for an electronic device as in any one of claims 1-3, wherein: said housing is of an arch shape which is protruding at its central area, and on four surrounding lateral sides each is provided respectively with one engaging side for engaging four surrounding lateral sides of a portable electronic device.

8. The positioning assembly for an electronic device as in any one of claims 1-3, wherein: said housing is provided adjacent to an inner side of said electronic device with a containing recess for containing said first magnetic unit, said containing recess is provided thereon with an upper cover for covering said first magnetic unit.

9. The positioning assembly for an electronic device as in any one of claims 1-3, wherein: said housing is a back side cover of a portable electronic device.
